# EUROPEAN PATENT APPLICATION

(11) **EP 4 667 397 A1**
(43) Date of publication of application: **24.12.2025**
(21) Application number: 24756964.3
(22) Date of filing: 15.02.2024
(51) Int. Cl.: B65G 65/40, B65G 33/08, B65G 43/08

(54) **CONTROL PARAMETER CALCULATION METHOD FOR GRANULE FEEDING APPARATUS AND GRANULE FEEDING APPARATUS**

(30) Priority: 16.02.2023 JP 2023022047
(71) Applicant: Kubota Corporation, Osaka-shi, Osaka 556-8601 (JP)
(72) Inventor: TASHIRO Takashi, Yao-city Osaka 5818686 (JP); HIRASHIMA Hiroshi, Yao-city Osaka 5818686 (JP); OUE Satoshi, Yao-city Osaka 5818686 (JP)
(74) Representative: Cabinet Beau de Loménie
(86) International application number: PCT/JP2024/005306
(87) International publication number: WO 2024/172124

(57) **Abstract**

Providing a method for calculating a control parameter for a powder and/or granule feeding apparatus and the powder and/or granule feeding apparatus, which can improve feeding accuracy in fixed amount feeding of powders. The method is for calculating a control parameter used to control a discharge amount of powders G in a powder and/or granule feeding apparatus 100 including a hopper 11 into which powders G are charged, and a feeder 12 discharging the powders G outside the apparatus. The method comprises a step S12 of filling the powders G into the feeder 12 without creating any non-filled area by conveying the powders G at a predetermined speed within the feeder 12, the powders G are first charged at a beginning of operation; a step S13 of bringing the powders G into a consolidation state within the feeder 12 by conveying the filled powders G through the feeder 12 at a speed faster than the predetermined speed; and a step S16 of calculating the control parameter using the discharge amount of the powders G in the consolidation state.

## Description

### Technical Field

The present invention relates to a method for calculating a control parameter for a powder and/or granule feeding apparatus, and the powder and/or granule feeding apparatus.

### Background Art

Powder and/or granule feeding apparatus, which are also mentioned as feeders and feed a fixed amount of powders and/or granules (hereinafter referred to simply as "powders") for example, are already widely known. This type of powder and/or granule feeding apparatus includes a hopper into which powders are charged, and a feeder that conveys the powders from the hopper by a screw and discharges the powders outside the apparatus.

Feeding the fixed amount of the powders is performed by controlling a discharge amount (discharge mass per unit time) of the powders outside the apparatus. Specifically, the discharge amount of the powders is feedback-controlled according to a difference between a discharge amount of the powders obtained by monitoring the discharge mass of the powders and a preset discharge amount. An example of a powder and/or granule feeding apparatus equipped with a means for performing the above-mentioned control is, for example, disclosed in Patent Document 1 below.

The Patent Document 1 is Japanese Patent Application Laid-Open No. 2023-003898.

### Summary of Invention

### Technical Problem

In the powder and/or granule feeding apparatus described in the Patent Document 1, when the powders are first charged into the feeder, empirical skill is required to make a flow state of the charged powders uniform and to ensure stable feeding in a short time. In particular, a state in which there is a gap between the powders and the screw, or between the powders and an inner peripheral surface of the feeder, is not a stable state. The presence or absence of the gap depends on operating conditions and procedures of the apparatus.

Furthermore, when a user uses the powders for the first time, the control parameters used to control a discharge amount of the powders must be adjusted. This is because different types of the powders have different characteristics of the system to be controlled, and therefore the optimal control parameters are different. The adjustment of the control parameters must be performed in a state where a stable feeding of the powders is possible. This is because if the control parameters are adjusted in an unstable state, an accuracy of obtained parameters will be low.

Here, the adjustment of the control parameters requires trial and error, and therefore the adjustment of the control parameters itself also requires empirical skill. If the adjustment is not performed by an expert, the accuracy of the control parameters will be low. The low accuracy of the control parameters leads to a low accuracy of a fixed amount feeding of the powders of the powder and/or granule feeding apparatus, which in turn leads to raw material loss of the powders.

It is therefore an object of the present invention to provide a method for calculating a control parameter for a powder and/or granule feeding apparatus, which can improve accuracy in the fixed amount feeding of the powders.

### Solution to Problem

In order to solve the above problem, a first aspect of the present invention provides a method for calculating a control parameter for a powder and/or granule feeding apparatus including a hopper into which powders are charged, and a feeder that conveys the powders from the hopper by a screw and discharges the powders outside the apparatus, comprising: a filling step of filling the powders into the feeder without creating any non-filled area by conveying the powders at a predetermined speed within the feeder, the powders are first charged at a beginning of operation; a consolidation step of bringing the powders into a consolidation state within the feeder by conveying the filled powders through the feeder at a speed faster than the predetermined speed; and a parameter calculation step of calculating the control parameter using the discharge amount of the powders in the consolidation state.

A second aspect of the present invention provides the method for calculating the control parameter wherein the parameter calculation step includes: calculating a gain constant for control using a dead time and a time constant obtained from a time-axis waveform of the discharge amount of the powders in the consolidation state, and correcting the gain constant using a maximum discharge amount of the powders in the consolidation.

A third aspect of the present invention provides a powder and/or granule feeding apparatus comprising: a hopper into which powders are charged; a feeder that conveys the powders from the hopper by a screw and discharges the powders outside the apparatus; and a controller that controls a discharge amount of the powders; wherein the controller includes: a speed control unit that controls a rotational speed of the screw to convey the powders within the feeder, and a parameter calculation unit that calculates a control parameter based on the discharge amount of the powders, wherein the speed control unit fills the powders into the feeder without creating any non-filled area by controlling the rotational speed of the screw to a predetermined rotational speed, and brings the filled powders into a consolidation state within the feeder by controlling the rotational speed to be faster than the predetermined rotational speed, and wherein the parameter calculation unit calculates the control parameter using the discharge amount of the powders in the consolidation state.

A fourth aspect of the present invention provides the powder and/or granule feeding apparatus wherein the parameter calculation unit performs: calculating a gain constant for control using a dead time and a time constant obtained from a time-axis waveform of the discharge amount of the powders in the consolidation state, and correcting the gain constant using a maximum discharge amount of the powders in the consolidation.

### Advantageous Effects of Invention

As a result of the research by the inventors, it was found that in order to stably discharge powders outside the apparatus, in addition to there being no gaps, the powders must be in a consolidated state within the feeder. Here, consolidation refers to a behavior of the powders decreasing in volume due to pressure force, and not involving destruction of particles consisting the powders. As a result of the further research, a method was found that can stabilize the fluid state and bring into the consolidated state. In addition, the inventors have made it possible to perform the method of calculating the control parameter as a series of sequences.

### Brief Description of Drawings

[FIG. 1] FIG. 1 is a diagram showing features of a powder and/or granule feeding apparatus according to an embodiment of the present invention.
[FIG. 2] FIG. 2 is a flow diagram showing steps of a method for calculating control parameters of the powder and/or granule feeding apparatus.
[FIG. 3A] FIG. 3A is a partial cross-sectional view showing a raw material charging step among the steps of the method for calculating the control parameters of the powder and/or granule feeding apparatus.
[FIG. 3B] FIG. 3B is a partial cross-sectional view showing a filling step among the steps of the method for calculating the control parameters of the powder and/or granule feeding apparatus.
[FIG. 3C] FIG. 3C is a partial cross-sectional view showing a consolidation step among the steps of the method for calculating the control parameters of the powder and/or granule feeding apparatus.
[FIG. 4] FIG. 4 is a flow diagram for explaining a parameter calculation step in the method for calculating the control parameters of the powder and/or granule feeding apparatus.
[FIG. 5] FIG. 5 is a graph for explaining the parameter calculation step in the method for calculating the control parameters of the powder and/or granule feeding apparatus.

### Description of Embodiments

Hereinafter, an embodiment of the present invention will be described with reference to the drawings. Same or corresponding parts are given the same reference symbols in the drawings, and the description will not be repeated.

### [Features of Powder and/or granule feeding apparatus]

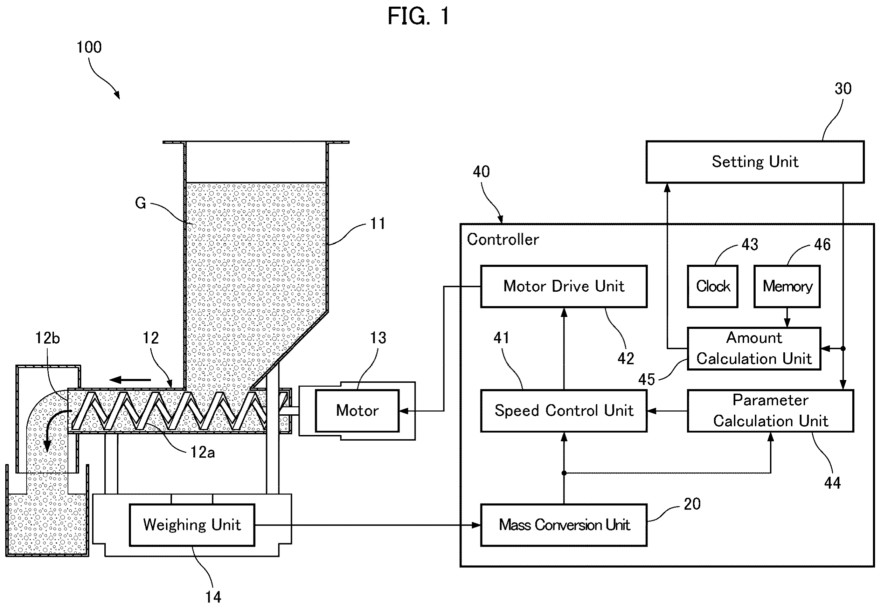

First, the features of the powder and/or granule feeding apparatus 100 according to the embodiment of the present invention will be described with reference to FIG. 1.

In FIG. 1, the features of the powder and/or granule feeding apparatus 100 are shown. The powder and/or granule feeding apparatus 100 includes at least a hopper 11, a feeder 12, and a motor 13. The hopper 11 is charged with powders G. As described above, the powders G means powders and/or granules. The feeder 12 conveys the powders G from the hopper 11 by a screw 12a and discharges the powders G outside the apparatus. The motor 13 drives the screw 12a.

The powder and/or granule feeding apparatus 100 further includes a weighing unit 14 that monitors mass of the powder and/or granule feeding apparatus 100, a mass conversion unit 20 that converts the monitored mass of the powder and/or granule feeding apparatus 100 into a discharge amount of the powders G (mass of a discharge amount of the powders G per unit time), a setting unit 30 that sets discharge conditions for the powders G, and a controller 40 that controls the discharge amount of the powders G. The discharge amount of the powders G is controlled by PI control using the current value of the monitored discharge amount of the powders G. The mass conversion unit 20 is included in the controller 40.

The mass conversion unit 20 converts the mass of the powder and/or granule feeding apparatus 100 into the discharge amount. Specifically, the mass conversion unit 20 uses the mass of the powder and/or granule feeding apparatus 100 monitored by the weighing unit 14 to determine the discharge amount of the powders G from a difference in mass of the powder and/or granule feeding apparatus 100 per unit time. The setting unit 30 is equipped with a user interface such as a liquid crystal display, and operation keys, etc. A user operates these to communicate with the controller 40 and set operating conditions, etc. In a fixed amount feeding operation that is the subject of the present invention, the discharge amount of the powders G is set as the operating condition (hereinafter, the set discharge amount of the powders G will be referred to as set discharge amount Fr).

The controller 40 includes a speed control unit 41 that controls a rotational speed of the motor 13 connected to the screw 12a so that the current value of powders discharge amount becomes the set discharge amount Fr, a motor drive unit 42 that drives the motor 13 based on a command value from the speed control unit 41, and a clock 43.

The controller 40 further includes a parameter calculation unit 44 that calculates control parameters, an amount calculation unit 45 that calculates the amount of the powders G required to calculate the parameters, and a memory 46.

The parameter calculation unit 44 calculates, for example, a proportional gain Kp and an integral gain Ki as gain constants used in the PI control. The parameter calculation unit 44 also calculates a correction coefficient k for correcting the gain constants. The gain constants corrected by the correction coefficient k are referred to as a corrected proportional gain Kp' and a corrected integral gain Ki', respectively. The corrected proportional gain Kp' and the corrected integral gain Ki' can be collectively referred to as corrected gain constants. A method for calculating each of the parameters will be described in detail later.

The speed control unit 41 performs the PI control according to a deviation between the current value of the discharge amount of the powders G and the set discharge amount Fr. That is, the speed control unit 41 determines a motor target rotational speed Nt using sum of the value obtained by multiplying the deviation by the corrected proportional gain Kp' and the value obtained by multiplying the time integral of the deviation by the corrected integral gain Ki', and indicates the motor target rotational speed Nt to the motor drive unit 42.

The motor drive unit 42 controls the motor 13 so that the rotational speed of the motor 13 becomes the motor target rotational speed Nt. The motor 13 is controlled, for example, by feeding back the sensed motor rotational speed to control the drive voltage. With the above features, the powder and/or granule feeding apparatus 100 is controlled to operate in the fixed amount feeding of the powders G at the set discharge amount Fr.

### [Method for Calculating Control Parameters for Powder and/or granule feeding apparatus]

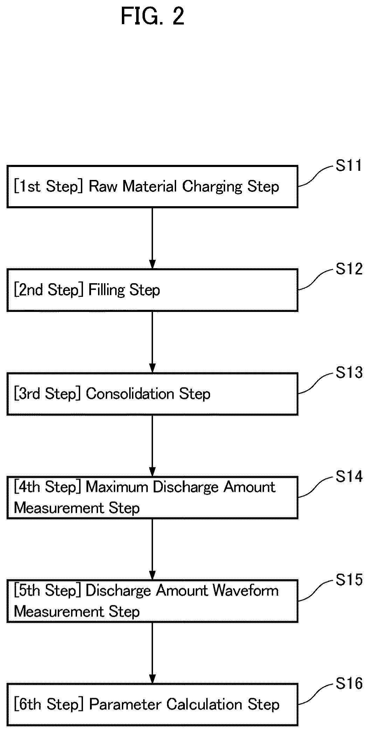

Next, the method for calculating the control parameters will be described with reference to FIG. 2. In FIG. 2, a diagram for explaining the method for calculating the control parameters for the powder and/or granule feeding apparatus 100 is shown. The calculation of the control parameters comprises six steps.

The first half having the first to third steps is steps carried out to stabilize a control system prior to obtaining data of the discharge amount required for calculating the control parameters. The control system refers to the entire powder and/or granule feeding apparatus 100 that constitutes a feedback loop. Of course, the control system includes the powders G that are powders and/or granules. The above-mentioned fluid state of the powders G is a factor that inhibits stability of this control system. Therefore, the first half of the steps stabilizes the fluid state of the powders G. The second half having the fourth to sixth steps is steps to obtain the data of the discharge amount required for calculating the control parameters after stabilizing the control system, and calculate each of the parameters using the obtained results.

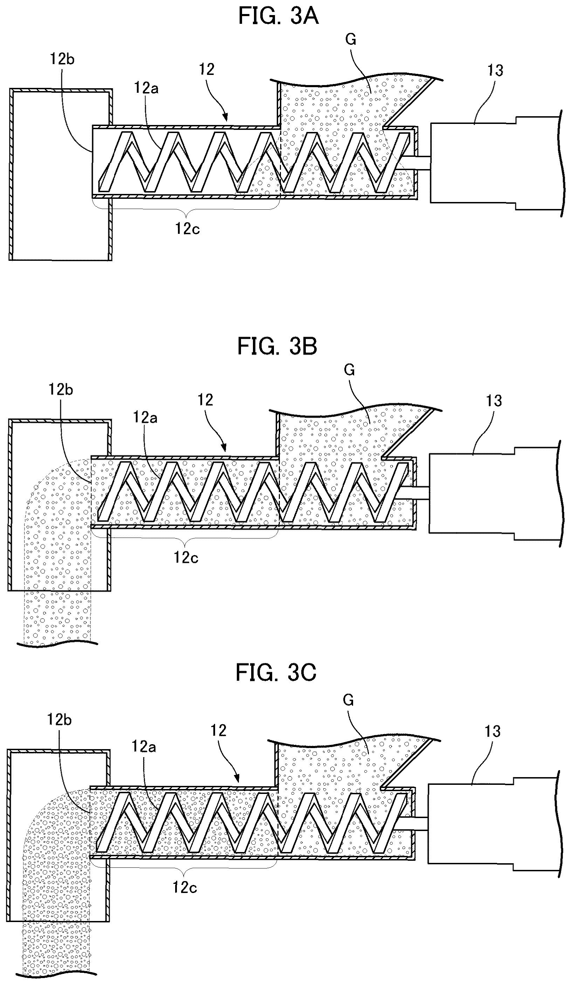

The first half of the steps in FIG. 2 will be described below with reference to FIGs. 3A - 3C. FIG. 3A, FIG. 3B and FIG. 3C show the first, second and third steps in FIG. 2, respectively.

FIG. 3A shows a state at the time when a raw material charging step S11, the first step, is completed. This step is a step in which the user first charges the powders G into the hopper 11 at a beginning of operation. At this time, more powders G than the amount of powders G required to complete the first to sixth steps shown in FIG. 2 are charged into the hopper 11. The amount of powders G required is calculated by the amount calculation unit 45 and is indicated to the user by the setting unit 30. The amount calculation unit 45 calculates the set discharge amount Fr and the amount of the powders G required from the operating conditions (a motor rotational speed and an operating time at that motor rotational speed) of each of the steps previously stored in the memory 46, and displays the calculated amounts on the setting unit 30.

When this step is completed, the powders G in the feeder 12 is simply piled up inside the feeder 12 immediately below the hopper 11 as shown in the figure. Therefore, there are irregular gaps in the feeder 12.

When handling the powders G that are prone to bridging (powder clogging) inside the hopper 11 or at a supply port to the feeder 12, in order to prevent this, a stirring mechanism or the like may be provided inside the hopper 11.

FIG. 3B shows the state of the powder and/or granule feeding apparatus 100 when a filling step S12, the second step, is completed. The powders G are gradually conveyed through the feeder 12 by the screw 12a and filled into the feeder 12 so as not to create any non-filled area. In other words, the powders G are filled so as not to leave any gap between the powders G and the screw 12a or between the powders G and the inner peripheral surface of the feeder 12.

As the operating conditions of the screw 12a, the rotational speed of the motor 13 is set to be relatively low, and the operating time is set to be as short as possible. The specific operating conditions vary depending on a bore of the screw 12a, a length of the screw 12a, a rated rotational speed of the motor 13, and other factors. However, in general, the rotational speed of the motor 13 is preferably within a range of 10% to 40% of the rated rotational speed of the motor 13 (an example of a predetermined rotational speed of the second step).

Here, the operating time is the minimum time required to fill the powders G into the feeder 12 without creating any non-filled area when the motor 13 is operated at the rotational speed within the above-mentioned preferred range in this second step, and is preferably within a range of about 5 seconds to 50 seconds. This allows the feeder 12 to be filled with the minimum amount of the powders G required. This makes it possible to reduce raw material loss of the powders G required for calculating the control parameters.

By setting the rotational speed of the motor 13 to be relatively low as described above, fluidity is improved around a contact area between the powders G and the screw 12a and around a contact area between the powders G and the inner peripheral surface of the feeder 12. Therefore, the powders G are conveyed to a discharge section 12b of the feeder 12 at the predetermined speed while gradually filling the gaps in the feeder 12. If the screw 12a is rotated at high speed while there are gaps in the feeder 12, the fluidity of the powders G is deteriorated. Therefore, a situation may occur in which the powders G do not flow from the hopper 11 into the feeder 12. Alternatively, the powders G are conveyed while there are irregular gaps in the feeder 12, and as a result, the powders G may be discharged from the feeder 12 with a pulsation.

FIG. 3C shows the state of the powder and/or granule feeding apparatus 100 when a consolidation step S13, the third step, is completed. In this step, the filled powders G are brought into a consolidation state within the feeder 12. Here, the consolidation state refers to a behavior in which the volume of the powders G is reduced by a pressure force, without destruction of granule particles. Since the powders G are a mixture of a solid and a gas, they can be brought into the consolidation state, by being pressurized and the mixture ratio of the gas being reduced.

As the operating conditions of the screw 12a, the rotational speed of the motor 13 is set to be relatively high, and the operating time is set to be as short as possible. The specific operating conditions vary depending on the bore of the screw 12a, the length of the screw 12a, the rated rotational speed of the motor 13, and other factors. However, in general, the rotational speed of the motor 13 is preferably within a range of 60% to 100% of the rated rotational speed of the motor 13 (an example of a predetermined rotational speed of the third step).

Here, the operating time is the minimum time required to bring the inside of the feeder 12 into the consolidated state when the motor 13 is operated at the rotational speed within the above-mentioned preferred range in this third step, and is preferably within the range of about 2 seconds to 15 seconds. This allows the inside of the feeder 12 to be brought into the consolidated state with the minimum amount of the powders G required. This makes it possible to reduce raw material loss of the powders G required for calculating the control parameters. Since some types of the powders G cannot be reused, it is desirable to reduce raw material loss of the powders G as much as possible.

By setting the rotational speed of the motor 13 to be relatively high as described above, the pressure force is applied to the powders G by the screw 12a. Thus, the powders G are conveyed through the feeder 12 at a speed higher than the predetermined speed. As a result, as shown in the figure, an inside of a discharge pipe 12c from an outlet of the hopper 11 to the discharge section 12b of the feeder 12 is brought into the consolidated state. After the powders G are brought into the consolidated state, they are discharged outside the apparatus. By being the consolidated state, the fluctuations in density and fluidity of the powders G are reduced and stabilized. Therefore, the fluctuations in the discharge amount are reduced and the discharge amount is stabilized.

By the above steps, the powders G are brought into the consolidated state within the feeder 12, so that the powder and/or granule feeding apparatus 100 can stabilize the discharge amount of the powders G. That is, the powder and/or granule feeding apparatus 100 can stabilize the control system.

Referring again to FIG. 2, the second half having the fourth to sixth steps will be described. The fourth step is a maximum discharge amount measurement step S14. In this step, the maximum discharge amount Fm of the powder and/or granule feeding apparatus 100 is measured. Specifically, the discharge amount of the powders G when the drive motor 13 of the screw 12a is at the rated rotational speed is obtained. Although details will be described later, the discharge amount of the powders G is a value required for calculating the control parameters. Since the powders G are in the consolidated state in the third step and the discharge amount is stabilized, the obtained value can be highly accurate.

When handling powders G having a low melting point, the maximum discharge amount Fm may be obtained at the motor rotational speed equal to or lower than the rated rotational speed for the purpose of suppressing a rise in temperature of the powders G and suppressing raw material loss of the powders G. For example, when the discharge amount is obtained at the rotational speed that is 50% of the rated rotational speed, the obtained value is doubled to become the maximum discharge amount Fm.

The fifth step is a discharge amount waveform measurement step S15. Although details will be described later, a step response waveform (a time-axis waveform of the powders discharge amount in response to a unit step input to the motor 13) of the discharge amount used to calculate the control parameters is obtained without using PI control, i.e., in an open loop state. Here, as well, since the powders G are in the consolidated state in the third step and the discharge amount is stabilized, the obtained waveform can be highly accurate.

The sixth step is a parameter calculation step S16, in which the control parameters are calculated from the results obtained in the fourth and fifth steps.

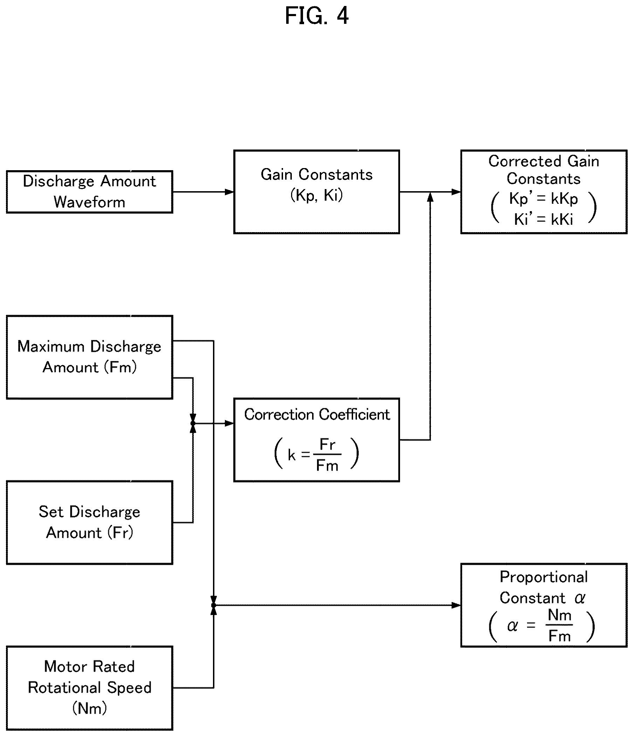

The content of the parameter calculation step S16 will be described below with reference to FIG. 4. FIG. 4 shows the control parameters calculated in the sixth step. As shown in the figure, the proportional gain Kp and the integral gain Ki as the gain constants, and the correction coefficient k for correcting these gain constants, are calculated. A proportional constant α, also shown in the figure, will be described later.

The gain constants can be calculated if a physical model of the control system to be controlled is constructed. However, it is difficult to express characteristics of the behavior of the powders G in the present invention using a physical model. In such cases, several methods have been proposed to experimentally determine the gain constants.

For example, methods for determining a gain constant from a step response waveform of a control system (hereinafter referred to as step response methods) include the Ziegler-Nichols method, the CHR method, etc. Note that the step response waveform in the present invention is the time-axis waveform of the powders discharge amount in response to the unit step input (a transient input of a predetermined motor rotational speed) given to the motor 13.

In the step response methods as described above, a time constant T and a dead time L are read as characteristic values from the step response waveform. Then, the gain constants are calculated using empirical formulas with these characteristic values as variables. In other words, when f(x) and g(x) are functions with x as a variable, for example, in the Ziegler-Nichols method, they can be expressed as Kp = f(T,L) and Ki = g(L). The read characteristic values are substituted into these empirical formulas to calculate the gain constants.

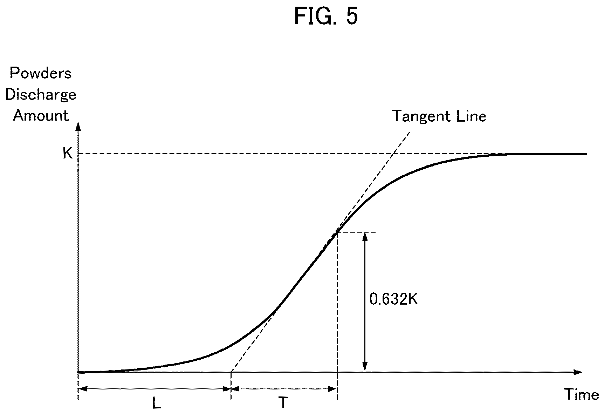

Procedure for reading the characteristic values from the step response waveform will be described with reference to FIG. 5. However, the procedure for reading the characteristic values described here is only an example and is not definitive. First, the time-axis waveform of the powders discharge amount is plotted as the step response waveform. Next, a tangent line is drawn at an inflection point of this waveform, and the dead time L from the origin is obtained from an intersection (time) of the tangent line with the X-axis. Next, a time from the origin when the discharge amount of the powders G becomes 63.2% of the final convergence value (K) is obtained. By subtracting the dead time L from this obtained time, the time constant T is obtained.

In addition to the above-mentioned step response methods, there are other methods such as the Hazebroek and Waerden method, the Wolfe method, and the Chien, Hrones and Reswick method, and a method can be selected according to the situation.

Next, the correction coefficient k will be described. The correction coefficient k corrects the values of the proportional gain Kp and the integral gain Ki according to the magnitude of the set discharge amount Fr. For example, when the set discharge amount Fr is small, the gain constants are corrected to be smaller accordingly. This allows the powder and/or granule feeding apparatus 100 to quickly stabilize the discharge amount regardless of the magnitude of the set discharge amount Fr.

The correction coefficient k is calculated as a ratio of the set discharge amount Fr to the maximum discharge amount Fm (k=Fr/Fm). The product of the proportional gain Kp and the correction coefficient k is the corrected proportional gain Kp', and the product of the integral gain Ki and the correction coefficient k is the corrected integral gain Ki'. In this way, the control parameters used in the PI control are calculated.

Finally, the proportional constant α will be described. As described above, the powder and/or granule feeding apparatus 100 performs feedback control (PI control) on the powders discharge amount. Here, the powder and/or granule feeding apparatus 100 can also perform two-degree-of-freedom control, which is a combination of feedback control and feedforward control, in order to further improve the controllability of the powders discharge amount.

In the feedback control, a control amount is determined according to the deviation between the current value of the discharge amount of the powders G and the set discharge amount Fr. Therefore, the deviation may be large immediately after the start of operation, and the control amount may become excessive. Therefore, the powder and/or granule feeding apparatus 100 performs the feedforward control only immediately after the start of operation. That is, the speed control unit 41 does not use the current value of the powders discharge amount, but directly instructs the motor drive unit 42 on the motor target rotational speed Nt corresponding to the set discharge amount Fr. Then, the speed control unit 41 switches from the feedforward control to the PI control after the motor rotational speed reaches the motor target rotational speed Nt. This allows the powder and/or granule feeding apparatus 100 to achieve both a high target value tracking accuracy of the feedback control (PI control) and a fast response speed of the feedforward control.

Here, it is empirically known that the motor rotational speed and a convergence value of the powders discharge amount are in a proportional relationship. Therefore, if the proportional constant is α, the motor target rotational speed Nt is calculated using the set discharge amount Fr as Nt = α x Fr. The proportional constant α is calculated as a ratio of the motor rated rotational speed Nm to the maximum discharge amount Fm (α = Nm/Fm).

As described above, the powder and/or granule feeding apparatus 100 stabilizes the discharge amount by setting the state of the powders G to the consolidation state, and then derives all the control parameters through a series of sequences. In reality, the user proceeds with the above steps according to instructions from the powder and/or granule feeding apparatus 100 each time. As a result, even if the user is not an expert, the control parameters are optimized according to the operating environment conditions. As a result, the powder and/or granule feeding apparatus 100 can improve the accuracy of the fixed amount feeding.

### [Example: Measurement Result of Maximum Discharge Amount Fm]

In the conventional method, the measured value of the maximum discharge amount Fm obtained in a sequence that does not include the consolidation step S13 at a beginning of operation had an error of 34% compared to the value measured after a sufficient operating time had passed. In contrast, in the sequence that includes the consolidation step S13 using the method of this embodiment, the value of the maximum discharge amount Fm obtained at the beginning of operation had an error of 0.11% compared to the value measured after a sufficient operating time had passed. In other words, the measurement accuracy of the maximum discharge amount Fm at the beginning of operation has been greatly improved.

### Explanation of References

- G: Powders (Powders and/or granules)
- 11: Hopper
- 12: Feeder
- 12a: Screw
- 12b: Discharge Section
- 13: Motor
- 14: Weighing Unit
- 20: Mass Conversion Unit
- 40: Controller
- 41: Speed Control Unit
- 42: Motor Drive Unit
- 43: Clock
- 44: Parameter Calculation Unit
- 45: Amount Calculation Unit
- 46: Memory
- 100: Powder and/or granule feeding apparatus
- S11: Raw Material Charging Step
- S12: Filling Step
- S13: Consolidation Step
- S14: Maximum Discharge Amount Measurement Step
- S15: Discharge Amount Waveform Measurement Step
- S16: Parameter Calculation Step

## Claims

1. A method for calculating a control parameter used to control a discharge amount of powders in a powder and/or granule feeding apparatus including a hopper into which powders are charged, and a feeder that conveys the powders from the hopper by a screw and discharges the powders outside the apparatus, comprising:
filling the powders into the feeder without creating any non-filled area by conveying the powders at a predetermined speed within the feeder, the powders are first charged at a beginning of operation;
bringing the powders into a consolidation state within the feeder by conveying the filled powders through the feeder at a speed faster than the predetermined speed; and
calculating the control parameter using the discharge amount of the powders in the consolidation state.

2. The method for calculating the control parameter according to claim 1, wherein calculating the control parameter includes:
calculating a gain constant for control using a dead time and a time constant obtained from a time-axis waveform of the discharge amount of the powders in the consolidation state, and
correcting the gain constant using a maximum discharge amount of the powders in the consolidation.

3. A powder and/or granule feeding apparatus comprising:
a hopper into which powders are charged;
a feeder that conveys the powders from the hopper by a screw and discharges the powders outside the apparatus; and
a controller that controls a discharge amount of the powders;
wherein the controller includes:
a speed control unit that controls a rotational speed of the screw to convey the powders within the feeder, and
a parameter calculation unit that calculates a control parameter based on the discharge amount of the powders,
wherein the speed control unit fills the powders into the feeder without creating any non-filled area by controlling the rotational speed of the screw to a predetermined rotational speed, and brings the filled powders into a consolidation state within the feeder by controlling the rotational speed to be faster than the predetermined rotational speed, and
wherein the parameter calculation unit calculates the control parameter using the discharge amount of the powders in the consolidation state.

4. The powder and/or granule feeding apparatus according to claim 3, wherein the parameter calculation unit performs:
calculating a gain constant for control using a dead time and a time constant obtained from a time-axis waveform of the discharge amount of the powders in the consolidation state, and
correcting the gain constant using a maximum discharge amount of the powders in the consolidation.
